# EUROPÄISCHE PATENTANMELDUNG

(11) **EP 3 467 795 A1**
(43) Veröffentlichungstag der Anmeldung: **10.04.2019**
(21) Anmeldenummer: 17194714.6
(22) Anmeldetag: 04.10.2017
(51) Int. Cl.: G07F 11/42, G07F 11/54, B65G 1/133

(54) **VERKAUFSAUTOMAT**

(71) Anmelder: Hesa Innovations GmbH, 64807 Dieburg (DE)
(72) Erfinder: Weber, Willi, 64807 Dieburg (DE)
(74) Vertreter: Uexküll & Stolberg

(57) **Zusammenfassung**

Die Erfindung ist gerichtet auf einen Verkaufsautomaten mit einem Gehäuse, einer Reihe von darin nebeneinander angeordneten Warenschächten (10) zur Aufnahme von in vertikaler Richtung ausgerichteten Stapeln von Warenschachteln, einer Auswahleinheit zur Eingabe einer Sortenauswahl, einer Bezahleinheit, einer Steuereinheit, die auf Rückmeldung der Bezahleinheit hin, dass ein ausreichender Betrag für die Warenauswahl gezahlt worden ist, einen Auswerfer (20) betätigt, um eine Schachtel der ausgewählten Sorte aus dem Stapel herauszuschieben, so dass sie in ein Ausgabefach gelangt, dadurch gekennzeichnet, dass die Reihe der Warenschächte eine endlose, geschlossene horizontale Karussellanordnung (2) von mit ihrer Ausgabeseite nach außen weisenden Warenschächten (10) bildet, in der benachbarte Warenschächte um eine vertikale Achse schwenkbar gelenkig miteinander verbunden sind und die in einer horizontalen Karussellführung beweglich gelagert ist, durch die zwei gegenüberliegende längere Längsseiten (4) mit jeweils mehreren nebeneinanderliegenden Warenschächten der Karussellanordnung (2) und zwei diese verbindende kürzere Querseiten (6) definiert sind, in denen ein Warenschacht (10) zentriert positionierbar ist, wobei der Auswerfer (20) hinter einer der Querseiten im Inneren der Karussellanordung angeordnet ist, dass ein Antrieb zum Verfahren der Karussellanordnung (2) vorhanden ist, und dass die Steuereinrichtung dazu eingerichtet ist, den Warenschacht, der die ausgewählte Warensorte enthält, durch Steuern des Antriebs zu der Querseite des Karussellführung mit dem Auswerfer (20) zu fahren und dann den Auswerfer (20) zu betätigen, um eine Schachtel der ausgewählten Sorte nach außen aus dem Schacht herauszuschieben.

## Beschreibung

Die Erfindung betrifft einen Verkaufsautomaten mit einem Gehäuse, einer Reihe von darin nebeneinander angeordneten Warenschächten zur Aufnahme von in vertikaler Richtung ausgerichteten Stapeln von Warenschachteln, einer Auswahleinheit zur Eingabe einer Sortenauswahl, einer Bezahleinheit, einer Steuereinheit, die dazu eingerichtet ist, auf Rückmeldung der Bezahleinheit hin, dass ein ausreichender Betrag für die Warenauswahl gezahlt worden ist, einen Auswerfer zu betätigen, um eine Schachtel der ausgewählten Sorte vorzuschieben und aus dem Stapel herauszuschieben, so dass sie in ein Ausgabefach gelangt.

Verkaufsautomaten sind seit langem bekannt. In der einfachsten Form sind in einem Gehäuse mehrere Warenschächte nebeneinander liegend angeordnet, wobei jeder Warenschacht mit einem Stapel von Schachteln einer Warensorte gefüllt ist. Jeder Warenschacht kann unten mit einer Ausgabelade versehen sein. In dieser einfachsten Form sind Verkaufsautomaten für Zigarettenschachteln seit Jahrzehnten bekannt. Derartige Verkaufsautomaten sind relativ einfach in Bezug auf ihren Aufbau, andererseits ist bei dieser Konstruktion für jeden Warenschacht ein zugehöriger Auswerfer vorgesehen, was bei einer großen Zahl von Warenschächten nachteilig ist.

Daneben wurden auch komplexere Konzepte für Auswurfsmechanismen für Verkaufsautomaten entwickelt, die einen weitaus flexibleren Betrieb der Verkaufsautomaten ermöglichen. Ein solcher Verkaufsautomat, auf dem der Oberbegriff von Anspruch 1 basiert, ist in DE 20 2009 013 028 U1 beschrieben. Der Verkaufsautomat hat in einem Gehäuse eine Mehrzahl von in horizontaler Richtung nebeneinander angeordneten Warenschächten zur Aufnahme von vertikalen Stapeln von Warenschachteln. Eine Auswahleinheit zur Eingabe einer Warenauswahl und ein Bezahleinheit sind in üblicher Weise ausgestaltet. Wesentlich für das Konzept dieses Verkaufsautomaten ist der Auswurfmechanismus, der einen XY-Linearantrieb und einen daran aufgehängten Auswerfer aufweist. Die X-Achse entspricht hier der horizontalen Richtung, in der die Warenschächte nebeneinanderliegen, und die Y-Achse der vertikalen Richtung, in der die Schachtel in einem Warenschacht übereinander aufgestapelt sind. Mittels des XY-Linearantriebs kann der Auswerfer über die gesamte Stirnfläche der nebeneinander liegenden Warenschächte in horizontaler Richtung (X-Richtung) und vertikaler Richtung (Y-Richtung) verfahren werden und dadurch steuerbar zu einer beliebigen ausgewählten Schachtel aus der Vielzahl von Warenschachteln in den nebeneinander liegenden Warenschächten verfahren werden und auf die ausgewählte Schachtel einwirken, um sie vor- und aus dem Warenstapel herauszuschieben, so dass sie in eine unter den Warenschächten liegende Ausgabewanne gelangt.

An dem XY-Linearantrieb kann ferner eine Kamera aufgehängt sein, die durch den XY-Linearantrieb ebenfalls die gesamte Stirnfläche der nebeneinander liegenden Warenstapel abfahren kann. Die Kamera ist mit der Steuereinheit verbunden, und die Steuereinheit ist dazu eingerichtet, wenigstens nach einer neuen Befüllung der Warenschächte eine gesamte Stirnfläche der Warenschächte mit der Kamera durch Betätigen des XY-Linearantriebs abzufahren und die Bilder der Kamera unter Identifizierung der einzelnen Sorten auszuwerten und jeweils die Sorteninformationen zusammen mit der zugehörigen Ortsinformation des XY-Linearantriebs als eine Sorte-Ort-Zuordnungsfunktion zu speichern. Auf diese Weise kann der Verkaufsautomat nach einer neuen Befüllung automatisch den Warenbestand in den Warenschächten erfassen und in einer Zuordnungsfunktion (z.B. einer Tabelle) speichern, an welcher vertikalen Position in welchen Warenschaft welche Sorte bereitsteht. Die Steuereinheit ist dann weiter dazu vorbereitet, bei Auswahl einer bestimmten Sorte die Sorte-Ort-Zuordnungsfunktion zu durchsuchen und den Auswerfer durch Betätigen des XY-Linearantriebs zu einem Ort zu verfahren, an dem sich eine Warenschachtel der ausgewählten Sorte nach Maßgabe der Sorte-Ort-Zuordnungsfunktion befindet, und eine Schachtel der ausgewählten Sorte mittels des Auswerfers auszugeben.

Ein solcher Verkaufsautomat erlaubt einen weitaus flexibleren Betrieb. Beispielsweise muss nicht für jede Warensorte ein zugeordneter Warenschacht vorhanden sein, da die Warensorten grundsätzlich beliebig verteilt in den Warenschächten verteilt sein können. Dies erlaubt es auch, weniger nachgefragte Sorten nur in kleinen Mengen in dem Verkaufsautomaten unterzubringen; für eine solche Sorte, die nur mit wenigen Warenschachteln vorhanden ist, muss kein eigener Warenschacht reserviert sein. Auf diese Weise können insgesamt auch mehr Warensorten in den Verkaufsautomaten eingefüllt werden als Warenschächte vorhanden sind.

Bei dem in DE 20 2009 013 028 U1 beschriebenen Verkaufsautomaten umfasst der Auswerfer einen Stößel, der senkrecht zur XY-Ebene verfahrbar ist. Der XY-Linearantrieb verfährt den Stößel in XY-Richtung, so dass er mittig hinter der Schachtel der ausgewählten Sorte liegt. Der Stößel wird dann in Z-Richtung vorgeschoben und schiebt dadurch die Schachtel vor und aus dem Stapel heraus. Bei beiden beschriebenen Ausführungsformen muss das Auswerferelement wenigstens die Länge der Schachteln in Längsrichtung haben, um in der Lage zu sein, eine solche Schachtel ganz aus dem Stapel heraus zu befördern. Bei unbetätigtem Auswerfer liegt der der Stößel mit dieser Länge in Z-Richtung verlaufend hinter den Warenschächten. Das bedeutet, dass hinter den Stirnflächen der Warenschachteln in den Warenschächten noch Bauraum im Gehäuse benötigt wird, der wenigstens der Länge des Stößels entspricht und damit wenigstens der Länge der Schachteln in Z-Richtung; somit wird neben dem Raum für die Warenschachteln wenigstens noch einmal so viel Raum für den Auswerfer im Gehäuse des Verkaufsautomaten benötigt.

Neben der Größe des Gehäuses ist durch seinen komplizierten Aufbau und die komplexe Steuerung nicht für alle Anwendungszwecke gut geeignet.

Es ist daher Aufgabe der vorliegenden Erfindung, einen kompakten, einfach und robust aufgebauten Verkaufsautomaten bereitzustellen, der mit einem oder wenigen Auswerfern auskommt.

Zur Lösung dieser Aufgabe dient der Verkaufsautomat mit den Merkmalen des Patentanspruchs 1. Vorteilhafte Ausführungsformen der Erfindung sind in den Unteransprüchen angegeben.

Gemäß der vorliegenden Erfindung sind die Warenschächte nicht wie bisher in einer ortsfest nebeneinander liegenden Anordnung fixiert, sondern bilden eine endlose, geschlossene horizontale Karussellanordnung von mit ihrer Ausgabeseite nach außen weisenden Warenschächten. In der Karussellanordnung sind benachbarte Warenschächte um eine vertikale Drehachse schwenkbar miteinander verbunden. Die Karussellanordnung bildet einen geschlossenen Ring von Warenschächten und ist in einer horizontalen Karussellführung beweglich gelagert, durch die zwei gegenüberliegende längere Längsseiten (4) mit jeweils mehreren nebeneinanderliegenden Warenschächten der Karussellanordnung (2) und zwei diese verbindende kürzere Querseiten (6) definiert sind, in denen ein Warenschacht (10) zentriert positionierbar ist. Der Auswerfer ist hinter einer der Querseiten im Inneren der Karussellanordnung angeordnet. Ferner ist ein Antrieb zum Drehen der Karussellanordnung entlang der Karussellführung vorhanden. Die Steuereinrichtung ist dazu eingerichtet, den Warenschacht, der die ausgewählte Warensorte enthält, durch Steuern des Antriebs zu der Querseite der Karussellführung mit dem Auswerfer zu fahren und dann den Auswerfer zu betätigen, um eine Schachtel der ausgewählten Sorte nach außen aus dem Warenschacht herauszuschieben.

Mit der erfindungsgemäßen drehbaren, geschlossenen Karussellanordnung der Warenschächte kann auf der einen Seite auf begrenztem Raum eine große Anzahl von Warenschächten untergebracht werden. Andererseits erhöht sich die Anzahl der Auswerfer nicht mit der Anzahl der Warenschächte und es wird auch kein entlang der Warenschächte verfahrbarer Auswerfer benötigt. Vielmehr wird durch Steuerung des Antriebs jeweils derjenige Warenschacht, der die ausgewählte Warensorte enthält, zu der Querseite der Karussellführung mit dem Auswerfer gefahren und dort dann der Auswerfer betätigt, um eine Schachtel der ausgewählten Sorte nach außen aus dem Warenschacht herauszuschieben.

Dem Prinzip nach hat diese Warenschachtanordnung mit einem horizontal drehbaren Karussell von Warenschächten gewisse Ähnlichkeiten mit sogenannten horizontalen Karussell-Lagersystemen, bei denen in einer Lagerhalle durch Drehen des Karussell-Lagersystems ein gewünschtes Lagerfach zu einem Abholort gefahren wird, wo ein Lagerbediensteter dann die gewünschte Ware aus dem Fach entnehmen kann. Diese Lagersysteme sind auch unter dem Begriff horizontaler Paternoster bekannt.

Der erfindungsgemäß ausgestaltete Verkaufsautomat hat eine Steuereinrichtung, in der zu jeder Warensorte gespeichert ist, in welchem Warenschacht sie sich befindet. Die Steuereinheit ist dazu eingerichtet, nach Auswahl einer Warensorte an der Auswahleinheit den Antrieb der Karussellanordnung so zu steuern, dass der Warenschacht mit der ausgewählten Sorte zu der Querseite der Karussellführung mit dem Auswerfer gefahren und der Warenschacht dort vor dem Auswerfer positioniert wird.

Der Auswerfer ist dabei so positioniert, dass er einen Stößel gegen die Rückfläche der untersten Schachtel in dem Warenschacht vorschiebt und diese dadurch nach außen aus dem Stapel im Warenschacht herausschiebt.

Falls es erwünscht ist, in dem Verkaufsautomaten mehr Sorten anzubieten, als Warenschächte in der Karusselanordnung vorhanden sind, ist nach einer vorteilhaften Ausführungsform vorgesehen, dass wenigstens ein Warenschacht durch einen Regalboden vertikal in ein unteres und ein oberes Regalfach unterteilt ist und dass an der Querseite neben dem Auswerfer, der zum Herausschieben einer am Boden des Warnschachtes befindlichen Warenschachtel aus dem unteren Regalfach angeordnet ist, ein zweiter Auswerfer so angeordnet ist, dass er eine auf dem Regalboden liegende Schachtel aus dem darüber liegenden Stapel aus dem oberen Regalfach herausschieben kann. Die Steuereinrichtung ist dazu eingerichtet, den Auswerfer des Regalfachs zu betätigen, das die Schachtel der ausgewählten Sorte enthält. Falls mehr als ein Warenschacht durch einen Regalboden in ein oberes und ein unteres Regalfach unterteilt ist, ist es zweckmäßig, dass die Regalböden jeweils in gleicher vertikaler Höhe angebracht sind, da dann ein zweiter Auswerfer für alle oberen Regalfächer ausreichend ist.

Falls eine noch größere Anzahl von Warensorten in dem Verkaufsautomaten angeboten werden soll, ist nach einer vorteilhaften Ausführungsform vorgesehen, dass wenigstens ein Warenschacht durch mehrere Regalböden in eine Mehrzahl von Regalfächern unterteilt ist und dass an der Querseite mit den Auswerfer jedem Regalboden ein Auswerfer zugeordnet ist, der so angeordnet ist, um eine auf dem zugeordneten Regalboden liegende waren Schachtel aus dem Regalfach herausschieben zu können. Die Steuereinrichtung ist dann dazu eingerichtet, nach Positionieren des jeweiligen Warenschachtes, der die ausgewählte Warensorte enthält, vor den Auswerfern zu positionieren und denjenigen Auswerfer zu betätigen, der dem Regalfach mit der Schachtel der ausgewählten Sorte zugeordnet ist. Wenn mehrere Warenschächte durch Regalböden jeweils in eine Mehrzahl von Regalfächern unterteilt sind, ist es auch hier zweckmäßig, die Regalböden jeweils in gleicher vertikaler Höhe anzuordnen, damit jeweils ein Auswerfer für alle Regalfächer mit Regalböden auf gleicher vertikaler Höhe eingesetzt werden kann.

Um die Flexibilität des Verkaufsautomaten hinsichtlich der Anzahl von möglichen Sorten zu erhöhen, ist nach einer bevorzugten Ausführungsform vorgesehen, dass der oder die Regalböden in dem wenigstens einen Warenschacht lösbar montiert und in auswählbaren vertikaler Höhe in dem Warenschacht fixierbar ist oder sind und dass der dem Regalboden oder die den Regalböden zugeordneten Auswerfer in vertikaler Position an den jeweiligen Regalboden des jeweils zugeordneten Regalfachs anpassbar montiert ist. Auf diese Weise kann die Anzahl der Regalfächer in den Warenschächten flexibel an die gewünschte Anzahl der anzubietenden Sorten in dem Verkaufsautomaten angepasst werden.

In einer bevorzugten Ausführungsform ist vorgesehen, dass jedes Paar benachbarter Warenschächte durch einen Verbindungssteg gelenkig miteinander verbunden ist, der jeweils auf Abstand zu den einander zugewandten äußeren Rändern der benachbarten Warenschächte gelenkig um eine vertikale Achse drehbar mit den benachbarten Warenschächten verbunden ist. Auf diese Weise kann ein Paar benachbarter Warenschächte, wenn der in Bewegungsrichtung führende Warenschacht in der Karussellführung von einer Längsseite in eine angrenzende Querseite gefahren werden und sich dabei um 90º die Querseite drehen, während der nachfolgende Warenschacht sich noch auf der Längsseite befindet, wobei der Verbindungssteg sich dabei schräg zu den zugewandten Rückwänden der von ihm verbundenen Warenschächte stellt. Daneben gibt es natürlich viele andere Verbindungsmechanismen, mit denen benachbarte Warenschächte in der Karussellanordnung gelenkig miteinander verbunden sein können, so dass sie der Karussellführung in den Kurven in den Übergangsbereichen von Längs- und Querseiten folgen können.

In einer vorteilhaften Ausführungsform ist vorgesehen, dass der Antrieb die Karussellanordnung gesteuert durch die Steuereinheit im oder entgegen dem Uhrzeigersinn drehen kann. Auf diese Weise kann jeweils der Drehsinn vorgegeben werden, mit dem der Fahrweg zum Auswerfer kleiner ist.

Die Erfindung wird im Folgenden anhand eines Ausführungsbeispiels im Zusammenhang mit den Zeichnungen beschrieben, in denen:
Fig. 1 eine schematische Draufsicht auf eine Karussellanordnung eines Verkaufsautomaten von oben zeigt,
Fig. 2 eine schematische Draufsicht auf einen einzelnen Warenschacht auf dessen zur Ausgabe offene Vorderseite zeigt und
Fig. 3 eine schematische perspektivische Ansicht einer Karussellanordnung für einen erfindungsgemäßen Verkaufsautomaten zeigt.

Die Auswahleinheit zur Eingabe einer Sortenauswahl und die Bezahleinheit sind für die vorliegende Erfindung nicht wesentlich und in den Figuren nicht gezeigt. Insofern wird beispielhaft auf den Verkaufsautomaten verwiesen, der in DE 20 2009 013 028 U1 beschrieben ist. Die Steuereinheit des Verkaufsautomaten ist in den Figuren ebenfalls nicht gezeigt; sie wird typischerweise als programmierbare Steuereinheit auf Mikroprozessorbasis ausgeführt. Die Steuereinheit ist mit der Auswahleinheit und der Bezahleinheit zum Datenaustausch verbunden.

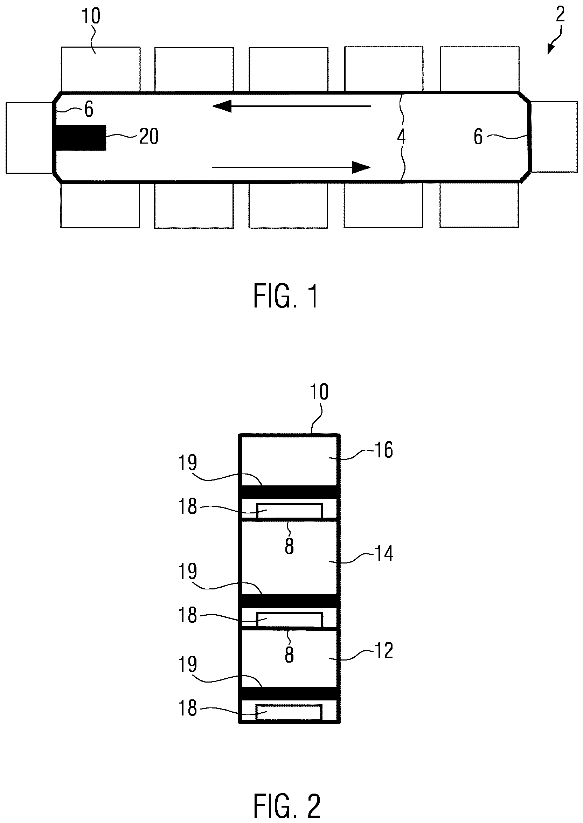

Fig. 1 zeigt eine sehr schematische Draufsicht auf eine Karussellanordnung 2 von gelenkig miteinander verbundenen Warenschächten 10. Die verbundene Karussellanordnung der Warenschächte 10 ist durch die dicke durchgezogenen Linie in den Längsseiten 4 und den Querseiten 6 der Karussellanordnung 2 dargestellt. Die gelenkige Verbindung benachbarter Warenschächte 10 ermöglicht es, dass beim Drehen der Karussellanordnung 2 entlang der horizontalen Karosserieführung (nicht gezeigt) ein Warenschacht 10 vom Ende einer Längsseite 4 in die angrenzende Querseite 6 gedreht werden kann und sich dabei um 90° relativ zu dem nachfolgenden Warenschacht drehen kann. Dieses Schwenken der gelenkigen Verbindung ist in Fig. 1 durch die jeweils schräggestellten Verbindungsbereiche der beiden an den Querseiten 6 befindlichen Warenschächte zu den ihnen jeweils benachbarten Warenschächten an den angrenzenden Längsseiten 4 angedeutet.

Die horizontale Karussellführung selbst, die die geschlossene Bewegungsbahn mit der in der Draufsicht von Fig. 1 gezeigten Form definiert, ist in den Figuren nicht dargestellt. Bei dieser Karussellführung kann es sich um eine Schienenführung handeln, in der die Karussellanordnung 2 unten am Boden des Gehäuses und/oder oben nahe einer Gehäusedecke gleitfähig geführt ist. Grundsätzlich sind hier ganz verschiedenartige Schienenführungen möglich, die nach den gleichen Prinzipien wie z.B. Gardinenschienenführungen ausgestattet sein können. Dabei kann die Karussellanordnung auch mit Wälzkörpern in Schienen der Karussellführung gelagert sein, um die Reibung beim Drehen der Karussellanordnung 2 in Karussellführung gering zu halten.

Im Inneren der Karussellanordnung 2 ist an einer der Querseiten 6 der Auswerfer 20 angeordnet. Falls in den Warenschächten 10 jeweils nur ein Warenfach gebildet ist, ist der Auswerfer 20 in vertikaler Richtung unten am Warenschacht, unmittelbar oberhalb des Bodens des Warenschachtes angeordnet. Der Auswerfer 20 kann zum Beispiel einen durch einen Linearantrieb vorwärts und rückwärts bewegbaren Stößel aufweisen. Beim Betätigen des Auswerfers wird der Stößel dann durch den Linearantrieb vorgeschoben, so dass er oberhalb des Bodens des Warenschachtes auf die Rückfläche der auf diesem Boden aufliegenden unteren Warenschachtel drückt und diese dadurch vor- und aus dem Warenstapel herausschiebt. In der schematischen Draufsicht auf die offene, vordere Ausgabeseite des Warenschachtes in Fig. 2, würde dieser Auswerfer seinen Stößel durch die unterste Öffnung 18 in der Rückwand des Warenschachtes 10 vorschieben, um die Schachtel herauszuschieben.

Bei der in Fig. 2 dargestellten Ausführungsform ist der Warenschacht 10 allerdings durch zwei Regalböden 8 in drei Regalfächer 12, 14 und 16 unterteilt. Eine solche Ausführungsform mit mehreren Regalfächern 12, 14, 16 im Warenschacht 10 ist von Vorteil, wenn in dem Verkaufsautomaten mehr Sorten untergebracht werden sollen, als Warenschächte vorhanden sind. Durch Vorsehen von mehreren Regalfächern pro Warenschacht kann die Anzahl der durch den Verkaufsautomaten handhabbaren verschiedenen Sorten entsprechend vervielfacht werden.

Wie in Fig. 2 ferner gezeigt ist, ist die offene vordere Ausgabeseite des Warenschachtes oberhalb der Öffnungen 18 in der Rückwand, durch die jeweils ein Stößel eines zugeordneten Auswerfers vorschiebbar ist, mit einem durch einen schwarzen Balken angedeuteter Sperrsteg 19 versehen. Diese Sperrstege 19 bilden eine Barriere für die oberhalb der jeweils untersten Schachtel in den Warenstapeln liegende Schachtel. Auf diese Weise wird durch die Sperrstege 19 verhindert, dass beim Herausschieben der untersten Warenschachtel aus dem Regalfach die darüber liegende Schachtel mit bewegt wird, denn diese wird durch den Sperrsteg 19 blockiert.

Falls mehrere oder alle Warenschächte 10 durch einen oder mehrere Regalböden 8 in mehrere Regalfächer 12, 14 und 16 unterteilt sind, ist es vorteilhaft, dass die vertikale Positionierung der Regalböden 8 aller Warenschächte 10 so aneinander angepasst ist, dass es insgesamt nur so viele vertikale Höhen von Regalböden 8 gibt, wie die maximale Anzahl von Regalböden 8 in einem Warenschacht ist. Dann ist es nämlich ausreichend so viele Auswerfer 20 an der Längsseite 6 vorzusehen wie maximal Regalfächer in einem Warenschacht der Karussellanordnung 2 vorhanden sind. In dem Ausführungsbeispiel von Fig. 2 bedeutet dies, dass neben dem Auswerfer nahe dem Boden des Warenschachtes 10 ein mittlerer Auswerfer unmittelbar oberhalb des ersten Regalbodens 8 und ein dritter Auswerfer unmittelbar oberhalb des zweiten Regalbodens 8 vorgesehen ist.

Auf die Flexibilität des Betriebs des Verkaufsautomaten zu erhöhen, ist es vorteilhaft, wenn die Regalböden 8 in ihrer Höhe versetzbar in den Warenschächten 10 montiert sind. Auf diese Weise können die Höhe der Regalfächer 12, 14, 16 und deren Anzahl pro Warenschacht verändert werden, indem ein weiterer Regalboden eingefügt oder einer entnommen wird. Parallel dazu ist es dann auch vorteilhaft, wenn die vertikal übereinander montierten Auswerfer 20 nach vertikaler Stellung verstellbar, z.B. an einer vertikalen Schiene aufgehängt sind, so dass sie in ihrer Stellung jeweils dem zugeordneten Regalboden 8 angepasst werden können.

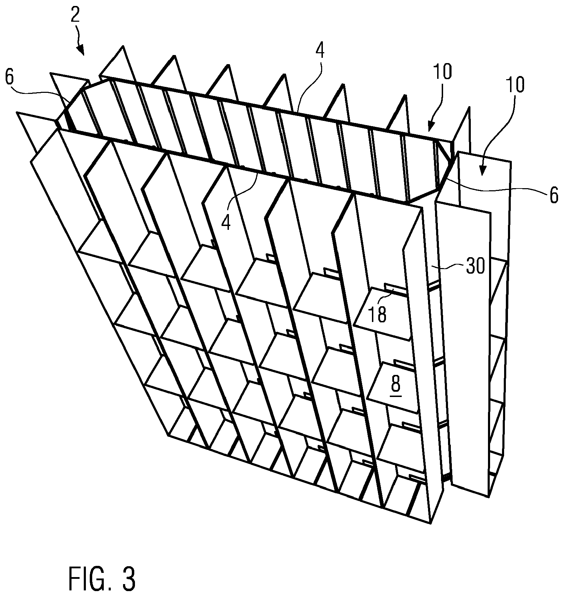

Fig. 3 zeigt schematisch eine perspektivische Ansicht einer Karussellanordnung 2 von Warenschächten 10. Die Warenschächte 10 sind hier mit einer geschlossenen Rückwand dargestellt, die jeweils nur durch eine Öffnung 18 für den dem jeweiligen Regalfach zugeordneten Auswerfer an der Querseite durchbrochen ist. In Fig. 3 sind zur Vereinfachung der Darstellung die Sperrstege 19 (siehe Fig. 2) fortgelassen. Tatsächlich ist aber für jedes Regalfach ein solcher Sperrsteg vorhanden, damit beim Herausschieben der untersten Schachtel durch den Auswerfer die darüber liegende Schachtel blockiert wird, so dass sie nach Herausschieben der untersten Schachtel und dem Zurückziehen des Stößels des Auswerfers in die Stellung als unterste Schachtel in dem Warenstapel in dem jeweiligen Warenfach rutscht.

Bei der in Fig. 3 dargestellten Ausführungsform sind benachbarte Warenschächte 10 jeweils durch mehrere Verbindungsstege 30 miteinander verbunden. Diese Verbindungsstege oder Verbindungsplatten 30 sind jeweils auf Abstand zu den einander zugewandten Rändern der benachbarten Warenschächte mit deren Rückseite um eine vertikale Achse drehbar verbunden. Auf diese Weise kann ein Warenschacht relativ zu dem benachbarten geschwenkt werden, wobei sich dabei der Verbindungssteg 30 schräg stellt. Dies ist in Fig. 3 bei den an den Querseiten 6 liegenden Warenschächten 10 zu sehen, die um 90° geschwenkt zu den angrenzenden Warenschächten an den Längsseiten 4 der Karussellanordnung 2 stehen.

Die Steuereinheit ist ferner mit einem Antrieb, z.B. einem Elektromotor, verbunden, der die Karussellanordnung entlang der horizontalen Karussellführung verfahren und dadurch einen gegebenen Warenschacht gezielt zu einem Auswerfer 20 an einer der Querseiten 6 drehen kann. Der Auswerfer ist z.B. mit einem vor- und zurückschiebbaren Stößel versehen, um eine Warenschachtel der ausgewählten Sorte aus der dem Stößel gegenüberliegenden Seite des Warenschachtes herauszuschieben. Die Steuereinheit ist ferner zum Datenaustausch mit Sensoren verbunden, die die momentane Drehstellung einer Karussellanordnung der Warenschächte erfassen. Auf diese Weise kann die Steuereinheit die Karussellanordnung kontrolliert in eine gewünschte Drehstellung fahren. Zur Ausgabe einer Schachtel einer bestimmten Sorte ermittelt die Steuereinheit 10 zunächst, in welchem Warenschacht das Regalfach mit der gewünschten Sorte liegt. Daraufhin steuert die Steuereinheit den Antrieb so, dass die Karussellanordnung in der horizontalen Karussellführung so verfahren und gedreht wird, dass der ausgewählte Warenschacht 10 an der Querseite 6 mit dem Auswerfer 20 positioniert wird. Dann betätigt die Steuereinheit denjenigen Auswerfer 20, der dem Regalfach zugeordnet ist, indem sich die ausgewählte Sorte befindet.

In Fig. 1 ist das Drehen der Karussellanordnung 2 durch den Antrieb durch zwei gegenüberliegende Pfeile an den Längsseiten 4 angedeutet, die eine Drehung entgegen dem Uhrzeigersinn zeigen. Es ist jedoch vorteilhaft, wenn der Antrieb auswählbar in beide Drehrichtungsinne betreibbar ist, sodass die Steuereinheit den Richtungsdrehsinn auswählen kann, mit dem der zum Auswerfer 20 zu fahrende Warenschacht 10 auf dem kürzesten Weg dorthin gefahren werden kann.

## Patentansprüche

**1.** Verkaufsautomat mit einem Gehäuse, einer Reihe von darin nebeneinander angeordneten Warenschächten (10) zur Aufnahme von in vertikaler Richtung ausgerichteten Stapeln von Warenschachteln, einer Auswahleinheit zur Eingabe einer Sortenauswahl, einer Bezahleinheit, einer Steuereinheit, die dazu eingerichtet ist, auf Rückmeldung der Bezahleinheit hin, dass ein ausreichender Betrag für die Warenauswahl gezahlt worden ist, einen Auswerfer (20) zu betätigen, um eine Schachtel der ausgewählten Sorte vorzuschieben und aus dem Stapel herauszuschieben, so dass sie in ein Ausgabefach gelangt, **dadurch gekennzeichnet, dass** die Reihe der Warenschächte eine endlose, geschlossene horizontale Karussellanordnung (2) von mit ihrer Ausgabeseite nach außen weisenden Warenschächten (10) bildet, in der benachbarte Warenschächte um eine vertikale Achse schwenkbar gelenkig miteinander verbunden sind und die in einer horizontalen Karussellführung beweglich gelagert ist, durch die zwei gegenüberliegende längere Längsseiten (4) mit jeweils mehreren nebeneinanderliegenden Warenschächten der Karussellanordnung (2) und zwei diese verbindende kürzere Querseiten (6) definiert sind, in denen ein Warenschacht (10) zentriert positionierbar ist, dass der Auswerfer (20) hinter einer der Querseiten im Inneren der Karussellanordung angeordnet ist, dass ein Antrieb zum Verfahren der Karussellanordnung (2) vorhanden ist und dass die Steuereinrichtung dazu eingerichtet ist, den Warenschacht, der die ausgewählte Warensorte enthält, durch Steuern des Antriebs zu der Querseite des Karussellführung mit dem Auswerfer (20) zu fahren und dann den Auswerfer (20) zu betätigen, um eine Schachtel der ausgewählten Sorte nach außen aus dem Schacht herauszuschieben.

**2.** Verkaufsautomat nach Anspruch 1, **dadurch gekennzeichnet, dass** der Auswerfer (20) einen Stößel und einen Linearantrieb aufweist, wobei der Stößel so angeordnet ist, dass er durch den Linearantrieb gegen die Rückfläche der untersten Schachtel in dem vor dem Auswerfer (20) positionierten Warenschacht vorschiebbar ist, um die Schachtel aus dem Warenschacht nach außen herauszuschieben.

**3.** Verkaufsautomat nach Anspruch 1 oder 2, **dadurch gekennzeichnet, dass** wenigstens ein Warenschacht (10) durch einen Regalboden (8) vertikal in ein unteres und ein oberes Regalfach unterteilt ist und dass an der Querseite neben dem Auswerfer (20), der zum Herausschieben einer am Boden des Warenschachtes befindlichen Warenschachtel aus dem unteren Regalfach angeordnet ist, ein zweiter Auswerfer so angeordnet ist, dass er eine auf dem Regalboden liegende Schachtel aus dem darüber liegenden Stapel aus dem oberen Regalfach herausschieben kann, und dass die Steuereinrichtung dazu eingerichtet ist, den Auswerfer des Regalfachs zu betätigen, das die Schachtel der ausgewählten Sorte enthält.

**3.** Verkaufsautomat nach Anspruch 2, **dadurch gekennzeichnet, dass** wenigstens ein Warenschacht (10) durch mehrere Regalböden (8) in eine Mehrzahl von Regalfächern (12, 14, 16) unterteilt ist und dass an der Querseite mit den Auswerfern (20) jedem Regalboden (8) ein Auswerfer zugeordnet ist, der so angeordnet ist, um eine auf dem zugeordneten Regalboden (8) liegende Warenschachtel aus dem Regalfach herausschieben zu können, und dass die Steuereinrichtung dazu eingerichtet ist, jeweils den Auswerfer zu betätigen, der dem Regalfach mit der Schachtel der ausgewählten Sorte zugeordnet ist.

**4.** Verkaufsautomat nach Anspruch 2 oder 3, **dadurch gekennzeichnet, dass** der oder die Regalböden (8) in dem wenigstens einen Warenschacht (10) lösbar montiert und in auswählbarer vertikaler Höhe in dem Warenschacht fixierbar ist oder sind und dass der dem Regalboden oder jedem der Regalböden jeweils zugeordnete Auswerfer in seiner vertikalen Positionierung an die vertikale Höhe des zugeordneten Regalbodens anpassbar montiert ist.

**5.** Verkaufsautomat nach einem der vorhergehenden Ansprüche, **dadurch gekennzeichnet, dass** benachbarte Warenschächte (10) durch einen Verbindungssteg (30) miteinander verbunden sind, der jeweils auf Abstand zu den einander zugewandten äußeren Rändern der benachbarten Warenschächte gelenkig um eine vertikale Achse drehbar mit den benachbarten Warenschächten verbunden ist.

**6.** Verkaufsautomat nach einem der vorhergehenden Ansprüche, **dadurch gekennzeichnet, dass** der Antrieb die Karussellanordnung (2) gesteuert durch die Steuereinheit im oder entgegen dem Uhrzeigersinn drehen kann.
